# EUROPEAN PATENT APPLICATION

(11) **EP 4 564 911 A1**
(43) Date of publication of application: **04.06.2025**
(21) Application number: 23845462.3
(22) Date of filing: 21.07.2023
(51) Int. Cl.: H04W 36/00

(54) **RECEIVING METHODS, TERMINAL, NETWORK SIDE DEVICE AND MEDIUM**

(30) Priority: 28.07.2022 CN 202210901015
(71) Applicant: Vivo Mobile Communication Co., Ltd., Dongguan, Guangdong 523863 (CN)
(72) Inventor: WU, Kai, Dongguan, Guangdong 523863 (CN); WANG, Yong, Dongguan, Guangdong 523863 (CN); GU, Yi, Dongguan, Guangdong 523863 (CN); CAI, Jiansheng, Dongguan, Guangdong 523863 (CN)
(74) Representative: Murgitroyd & Company
(86) International application number: PCT/CN2023/108649
(87) International publication number: WO 2024/022252

(57) **Abstract**

This application discloses a receiving method, a terminal, a network side device, and a medium, and belongs to the field of communication technologies. The receiving method in embodiments of this application includes: determining, by a terminal, a receiving manner of a control object based on a target measurement value, where the receiving manner includes any one of the following: receiving the control object by using a first receiver in the terminal, receiving the control object by using a second receiver in the terminal, and not receiving the control object; the control object includes at least one of the following: a control signal and a control channel; and the target measurement value is used to indicate quality of a current channel.

## Description

### CROSS-REFERENCE TO RELATED APPLICATIONS

This application claims the priority of Chinese Patent Application No. 202210901015.X filed in China on July 28, 2022, the entire content of which is hereby incorporated by reference.

### TECHNICAL FIELD

This application belongs to the field of communication technologies, and specifically relates to a receiving method, a terminal, a network side device, and a medium.

### BACKGROUND

Generally, a low power-wake up signal (lower power-wake up signal, LP-WUS) has a low-power-consumption characteristic, and receiving power consumption of a terminal when receiving the LP-WUS can be significantly reduced. In addition, the terminal may receive the LP-WUS very frequently, thereby reducing a signal transmission delay while reducing power consumption. However, because of a low-power-consumption characteristic of receiving a control signal or a control channel by using an LP-WUS or a similar design, coverage of such a control signal or a control channel is generally less than coverage of a signal or a channel received by a receiver in a terminal. Consequently, receiving performance of the receiver when receiving such a control signal or a control channel is poor. How to ensure receiving performance of a signal while reducing power consumption becomes an urgent problem to be solved.

### SUMMARY

Embodiments of this application provide a receiving method, a terminal, a network side device, and a medium, so as to solve a problem of ensuring receiving performance of a signal while reducing power consumption.

According to a first aspect, a receiving method is provided, and the method includes: determining, by a terminal, a receiving manner of a control object based on a target measurement value, where the receiving manner includes any one of the following: receiving the control object by using a first receiver in the terminal, receiving the control object by using a second receiver in the terminal, and not receiving the control object; the control object includes at least one of the following: a control signal and a control channel; and the target measurement value is used to indicate quality of a current channel.

According to a second aspect, a receiving apparatus is provided, and the apparatus includes a determining module. The determining module is configured to determine a receiving manner of a control object based on a target measurement value. The receiving manner includes any one of the following: receiving the control object by using a first receiver in a terminal, receiving the control object by using a second receiver in the terminal, and not receiving the control object; the control object includes at least one of the following: a control signal and a control channel; and the target measurement value is used to indicate quality of a current channel.

According to a third aspect, a receiving method is provided, and the method includes: receiving, by a network side device, first information sent by a terminal. The first information includes at least one of the following: a target measurement value and first indication information; the target measurement value is used to indicate quality of a current channel; and the first indication information is used to indicate that the terminal no longer receives a control object, and the control object includes at least one of the following: a control signal and a control channel.

According to a fourth aspect, a receiving apparatus is provided, and the apparatus includes a receiving module. The receiving module is configured to receive first information sent by a terminal, where the first information includes at least one of the following: a target measurement value and first indication information; the target measurement value is used to indicate quality of a current channel; and the first indication information is used to indicate that the terminal no longer receives a control object, and the control object includes at least one of the following: a control signal and a control channel.

According to a fifth aspect, a terminal is provided, where the terminal includes a processor and a memory, the memory stores a program or instructions capable of running on the processor, and the program or the instructions are executed by the processor to implement the steps of the method according to the first aspect.

According to a sixth aspect, a terminal is provided, including a processor and a communication interface, where the processor is configured to determine a receiving manner of a control object based on a target measurement value. The receiving manner includes any one of the following: receiving the control object by using a first receiver in the terminal, receiving the control object by using a second receiver in the terminal, and not receiving the control object; the control object includes at least one of the following: a control signal and a control channel; and the target measurement value is used to indicate quality of a current channel.

According to a seventh aspect, a network side device is provided, where the network side device includes a processor and a memory, the memory stores a program or instructions capable of running on the processor, and the program or the instructions are executed by the processor to implement the steps of the method according to the third aspect.

According to an eighth aspect, a network side device is provided, including a processor and a communication interface, where the communication interface is configured to receive first information sent by a terminal, where the first information includes at least one of the following: a target measurement value and first indication information; the target measurement value is used to indicate quality of a current channel; and the first indication information is used to indicate that the terminal no longer receives a control object, and the control object includes at least one of the following: a control signal and a control channel.

According to a ninth aspect, a communication system is provided, including a terminal and a network side device, where the terminal may be configured to perform the steps of the receiving method according to the first aspect, and the network side device may be configured to perform the steps of the receiving method according to the third aspect.

According to a tenth aspect, a readable storage medium is provided, where a program or instructions are stored on the readable storage medium, and the program or the instructions are executed by a processor to implement the steps of the method according to the first aspect or the steps of the method according to the third aspect.

According to an eleventh aspect, a chip is provided, where the chip includes a processor and a communication interface, the communication interface is coupled to the processor, and the processor is configured to run a program or instructions to implement the method according to the first aspect or implement the method according to the third aspect.

According to a twelfth aspect, a computer program/program product is provided, where the computer program/program product is stored in a storage medium, and the computer program/program product is executed by at least one processor to implement the steps of the receiving method according to the first aspect.

In embodiments of this application, a terminal may determine a receiving manner of a control object based on a target measurement value, where the receiving manner includes any one of the following: receiving the control object by using a first receiver in the terminal, receiving the control object by using a second receiver in the terminal, and not receiving the control object; the control object includes at least one of the following: a control signal and a control channel; and the target measurement value is used to indicate quality of a current channel. In this solution, the terminal may determine a receiving manner of the control signal and/or the control channel based on the quality of the current channel, that is, select a proper receiver based on the quality of the current channel to receive the control signal and/or the control channel, so as to ensure receiving performance of the signal and/or the channel while reducing power consumption.

### BRIEF DESCRIPTION OF DRAWINGS

FIG. 1 is a schematic diagram of a possible communication system architecture according to an embodiment of this application;
FIG. 2 is a flowchart of a receiving method according to an embodiment of this application;
FIG. 3 shows two possible sequence formats of an LP-WUS according to an embodiment of this application;
FIG. 4 is a working principle diagram of a low power-wake up receiver according to an embodiment of this application;
FIG. 5 is a schematic diagram of an on-off keying signal according to an embodiment of this application;
FIG. 6 is a schematic interaction diagram of a receiving method according to an embodiment of this application;
FIG. 7 is a first schematic structural diagram of a receiving apparatus according to an embodiment of this application;
FIG. 8 is a second schematic structural diagram of a receiving apparatus according to an embodiment of this application;
FIG. 9 is a schematic structural diagram of a communication device according to an embodiment of this application;
FIG. 10 is a schematic diagram of a hardware structure of a terminal according to an embodiment of this application; and
FIG. 11 is a schematic structural diagram of a network side device according to an embodiment of this application.

### DESCRIPTION OF EMBODIMENTS

The following clearly describes the technical solutions in embodiments of this application with reference to the accompanying drawings in the embodiments of this application. Clearly, the described embodiments are some but not all of the embodiments of this application. All other embodiments obtained by a person of ordinary skill in the art based on the embodiments of this application shall fall within the protection scope of this application.

In the specification and claims of this application, the terms "first" and "second" are used to distinguish between similar objects, but are unnecessarily used to describe a specific sequence or order. It should be understood that the terms in such a way are exchangeable in a proper case, so that the embodiments of this application described herein can be implemented in an order other than the order shown or described herein. In addition, objects distinguished by "first", "second", and the like are generally of one type, and a quantity of objects is not limited. For example, there may be one or more first objects. In addition, "and/or" in this specification and the claims represents at least one of the connected objects, and the character "/" generally represents an "or" relationship between the associated objects.

It should be noted that technologies described in embodiments of this application are not limited to a Long Term Evolution (Long Term Evolution, LTE)/LTE-Advanced (LTE-Advanced, LTE-A) system, and may be further applied to another wireless communication system such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency Division Multiple Access (Single-carrier Frequency Division Multiple Access, SC-LTE-A), and another system. The terms "system" and "network" in the embodiments of this application are often used interchangeably. The described technology may be used in the foregoing system and radio technology, or may be used in another system and radio technology. The following description describes a New Radio (New Radio, NR) system for example, and the NR term is used in most of the following descriptions. However, these technologies may also be applied to applications other than NR system applications, such as a 6th Generation (6th Generation, 6G) communication system.

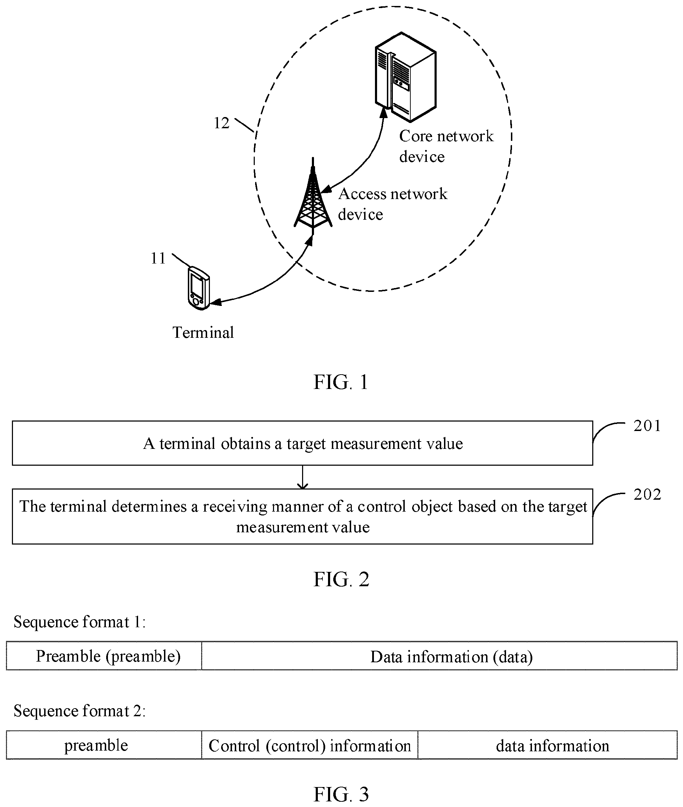

FIG. 1 is a block diagram of a wireless communication system applicable to an embodiment of this application. The wireless communication system includes a terminal 11 and a network side device 12. The terminal 11 may be a terminal-side device such as a mobile phone, a tablet personal computer (Tablet Personal Computer), a laptop computer (Laptop Computer), or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), a vehicular user equipment (VUE), a pedestrian user equipment (PUE), a smart home (a home device with a wireless communication function, such as a refrigerator, a television, a washing machine, or furniture), a game machine, a personal computer (personal computer, PC), a teller machine, or a self-service device. The wearable device includes: a smart watch, a smart band, a smart headset, smart glasses, smart jewelry (a smart wristlet, a smart bracelet, a smart ring, a smart necklace, a smart leglet, a smart anklet, and the like), a smart wrist strap, a smart dress, and the like. It should be noted that a specific type of the terminal 11 is not limited in embodiments of this application. The network side device 12 may include an access network device or a core network device. The access network device 12 may also be referred to as a radio access network device, a radio access network (Radio Access Network, RAN), a radio access network function, or a radio access network unit. The access network device 12 may include a base station, a WLAN access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting receiving point (Transmitting Receiving Point, TRP), or another suitable term in the art. Provided that a same technical effect is achieved, the base station is not limited to a specific technical term. It should be noted that in embodiments of this application, only a base station in an NR system is used as an example for description, and a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function unit (Policy and Charging Rules Function, PCRF), an edge application server discovery function (Edge Application Server Discovery Function, EASDF), unified data management (Unified Data Management, UDM), unified data repository (Unified Data Repository, UDR), a home subscriber server (Home Subscriber Server, HSS), centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), and the like. It should be noted that in embodiments of this application, only a core network device in an NR system is used as an example for description, and a specific type of the core network device is not limited.

With reference to the accompanying drawings, the following describes in detail the receiving method provided in embodiments of this application by using some embodiments and application scenarios thereof.

An embodiment of this application provides a receiving method. FIG. 2 is a flowchart of a receiving method according to an embodiment of this application. As shown in FIG. 2, the receiving method provided in this embodiment of this application includes the following step 201 and step 202.

Step 201: A terminal obtains a target measurement value.

Step 202: The terminal determines a receiving manner of a control object based on the target measurement value.

The receiving manner includes any one of the following:
receiving the control object by using a first receiver in the terminal;
receiving the control object by using a second receiver in the terminal; and
not receiving the control object;
the control object includes at least one of the following: a control signal and a control channel; and
the target measurement value is used to indicate quality of a current channel.

In this embodiment of this application, the terminal may determine the receiving manner of the control signal and/or the control channel based on the quality of the current channel, that is, select a proper receiver based on the quality of the current channel to receive the control signal and/or the control channel, so as to ensure receiving performance of the signal and/or the channel while reducing power consumption.

Optionally, in this embodiment of this application, the control signal may be an LP-WUS. For example, FIG. 3 shows two possible sequence formats of the LP-WUS.

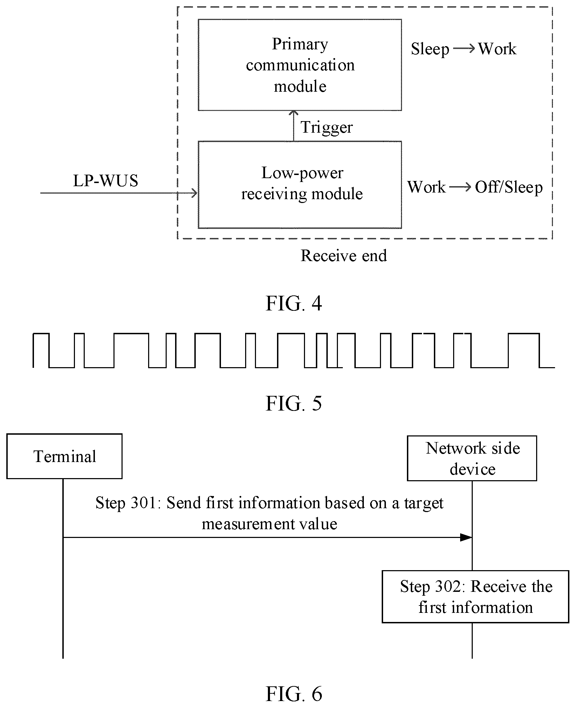

For example, as shown in FIG. 4, a basic working principle of a low power-wake up receiver (low power-wake up receiver, LP-WUR) is as follows: A receive end (for example, a terminal) includes a first module and a second module. The first module (for example, a second receiver) is a primary communication module, and is configured to receive and send communication data. The second module (for example, a first receiver) is a low-power receiving module, and is configured to receive a wake up signal. The terminal enables the low-power receiving module in an energy-saving state to monitor the LP-WUS and disables the primary communication module. When downlink data arrives, a network side device sends a wake up signal to the terminal. After monitoring the wake up signal by using the low-power receiving module, the terminal triggers the primary communication module after a series of determining, to change from an off state to an on state (in this case, the low-power receiving module enters the off state from a working state). In addition, the low-power receiving module may be continuously on or intermittently on, and may receive a low power-wake up signal when being enabled.

Generally, a low-power receiver may reduce receiving power consumption in a manner such as simplifying a radio frequency front end, using a low-precision clock/crystal oscillator, using envelope detection to perform detection, and using a low-speed low-bit analog-to-digital converter (analog-to-digital converter, ADC).

To reduce receiving activity of the terminal in a standby state, so that a radio frequency (radio frequency, RF) module and a modem (modem) module are truly disabled, and receiving power consumption is greatly reduced, a near-"zero" power receiver may be introduced into the receiving module of the terminal. This near-"zero" power receiver does not require complex signal detection (such as amplification, filtering, and quantization) by the RF module and signal processing by the modem, and can only depend on passive matched filtering and signal processing with low power consumption.

On a network side, a wake up signal may be triggered on-demand (on-demand), so that the near-"zero" power receiver can be activated to learn of a wake up advertisement, thereby triggering a series of procedures inside the terminal, for example, enabling a radio frequency transceiver module and a baseband processing module. As shown in FIG. 5, generally the wake up signal is a relatively simple on-off keying (on-off keying, OOK) signal. In this way, the near-"zero" power receiver can learn of a wake up advertisement by using a process such as simple energy detection and subsequent possible sequence detection and identification.

Optionally, in this embodiment of this application, receiving performance of the second receiver is higher than receiving performance of the first receiver. For example, receiving power consumption of the second receiver (that is, a primary receiver) is higher than receiving power consumption of the first receiver (that is, a low-power receiver). Alternatively, another performance indicator of the second receiver is higher than corresponding another performance indicator of the first receiver, and may be specifically determined according to an actual use needs. This is not limited in this embodiment of this application.

Optionally, in this embodiment of this application, the target measurement value includes at least one of the following:
reference signal received power (reference signal received power, RSRP);
reference signal received quality (reference signal received quality, RSRQ);
a received signal strength indicator (received signal strength indicator, RSSI);
a signal to interference plus noise ratio (signal to interference plus noise ratio, SINR);
a channel quality indicator (channel quality indicator, CQI); and
a hypothetical block error rate (hypothetical block error ratio, hypothetical BLER).

Optionally, in this embodiment of this application, the hypothetical BLER is a BLER estimated by the terminal when receiving a specific control channel. The hypothetical block error rate is generally a block error rate of a specific channel that is measured and calculated by the terminal for measurement on a channel, for example, measurement of a signal-to-noise ratio (signal-to-noise ratio, SNR), an SINR, a CQI, or RSRP. The specific channel may be a physical downlink control channel (physical downlink control channel, PDCCH).

Optionally, in this embodiment of this application, the target measurement value is a measurement value obtained by filtering at least one measurement value measured during a first time period.

The first time period is configured by a network side device or stipulated in a protocol.

It may be understood that the terminal may measure a channel in the first time period to obtain at least one measurement value, and then filter the at least one measurement value to obtain the target measurement value. In this way, the terminal determines the quality of the current channel based on the at least one measurement value, and can more accurately determine the receiving manner of the control object according to the quality of the current channel.

It should be noted that the filtering is performing weighted summation on the at least one measurement value.

Optionally, in this embodiment of this application, the target measurement value is at least one measurement value continuously measured during a second time period.

The second time period is configured by a network side device or stipulated in a protocol.

It may be understood that the terminal may continuously measure a channel in the second time period to obtain at least one measurement value, that is, the target measurement value. In this way, the terminal determines the quality of the current channel based on the at least one measurement value, and can more accurately determine the receiving manner of the control object according to the quality of the current channel.

Optionally, in this embodiment of this application, "configured by the network side device" may be understood as "preconfigured by the network side device on the terminal" or "currently configured by the network side device for the terminal".

Optionally, in this embodiment of this application, the control object is used to indicate at least one of the following:
whether to skip PDCCH monitoring; and
whether to switch a PDCCH search space.

In a radio resource control (radio resource control, RRC) connected state, in an application scenario, the terminal may be configured to first monitor an LP-WUS (monitoring power consumption of the LP-WUS is much lower than monitoring power consumption of a PDCCH, for example, the monitoring power consumption of the LP-WUS is 0.005 unit/ms and the monitoring power consumption of the PDCCH is 100 unit/ms), and then enter PDCCH monitoring after the LP-WUS is monitored, thereby implementing energy and power saving by replacing unnecessary PDCCH monitoring with LP-WUS monitoring.

The LP-WUS represents a control object received by using a low-power receiver, and includes control information, and the control information may be used to wake up a function module of a receiver in the terminal, or indicate the terminal to perform another receiving behavior, for example, in this embodiment of this application, used to indicate the terminal to perform a PDCCH receiving behavior.

In another application scenario, LP-WUS monitoring may be deployed in duration in which PDCCH monitoring is skipped. Because the terminal does not monitor the PDCCH in this time period, a transmission delay is caused. However, with LP-WUS monitoring, the terminal can be woken at any moment in this time period. A delay of entering PDCCH monitoring after the LP-WUS is monitored mainly depends on a sleep state to which the primary receiver enters (for example, deep sleep (deep sleep), light sleep (light sleep), and micro sleep (micro sleep)). Therefore, a delay reduction effect can be achieved.

Optionally, in this embodiment of this application, the not receiving the control object includes:
not receiving the control object, and performing PDCCH monitoring in all configured PDCCH search spaces.

In this embodiment of this application, because the control object is used to indicate whether to skip PDCCH monitoring and/or switch a PDCCH search space, when the terminal does not receive the control object, the terminal may perform PDCCH monitoring in all the configured PDCCH search spaces, thereby avoiding missing detection of the PDCCH.

Optionally, in this embodiment of this application, the control object is an object processed in a target processing manner.

The target processing manner includes at least one of the following:
an on-off keying (on-off keying, OOK) modulation scheme;
an M-ary amplitude shift keying (amplitude shift keying, ASK) modulation scheme, where M is a positive integer;
Manchester (manchester) coding scheme;
a bi-phase space coding (bi-phase space coding) scheme (that is, FM0 coding scheme);
Miller (miller) coding scheme;
a synchronous orthogonal coding scheme (for example, Walsh coding scheme); and
a pulse interval encoding (pulse interval encoding, PIE) scheme.

Optionally, in this embodiment of this application, the OOK modulation scheme represents 1 and 0 by using {0, 1}. In the M-ary ASK modulation scheme (that is, M-ASK), when M=2, 1 and 0 may be represented by using {1, -1}, {1, 3}, or another amplitude combination. OOK belongs to a case of 2ASK.

Optionally, in this embodiment of this application, M is generally an integer power of 2.

It may be understood that only a control object processed in the target processing manner can be received by the first receiver or the second receiver.

Optionally, in this embodiment of this application, step 202 may be specifically implemented by using the following step 202a or step 202b.

Step 202a: In a case that the target measurement value is less than a first threshold, the terminal determines that the receiving manner includes receiving the control object by using the second receiver, or not receiving the control object.

Optionally, in this embodiment of this application, in a case that the target measurement value is less than or equal to the first threshold, the terminal determines that the receiving manner includes receiving the control object by using the second receiver, or not receiving the control object.

It may be understood that, the target measurement value being less than the first threshold indicates that the quality of the current channel is poor. In this case, the terminal may receive the control object by using the second receiver, or not receive the control object.

Step 202b: In a case that the target measurement value is greater than the first threshold, the terminal determines that the receiving manner includes receiving the control object by using the first receiver.

Optionally, in this embodiment of this application, in a case that the target measurement value is greater than or equal to the first threshold, the terminal determines that the receiving manner includes receiving the control object by using the first receiver.

It may be understood that, the target measurement value being greater than the first threshold indicates that the quality of the current channel is good. In this case, the terminal may receive the control object by using the first receiver.

Optionally, in this embodiment of this application, the first threshold is configured by the network side device or stipulated in the protocol.

Optionally, in this embodiment of this application, "configured by the network side device" may be understood as "preconfigured by the network side device on the terminal" or "currently configured by the network side device for the terminal".

Optionally, in this embodiment of this application, as shown in FIG. 6, the receiving method provided in this embodiment of this application further includes the following steps 301 and 302.

Step 301: The terminal sends first information to the network side device based on the target measurement value.

Step 302: The network side device receives the first information sent by the terminal.

The first information includes at least one of the following:
the target measurement value; and
first indication information, where the first indication information is used to indicate that the terminal no longer receives the control object.

Optionally, in this embodiment of this application, the terminal may send the first information to the network side device based on the target measurement value and the first threshold. That is, in a case that the target measurement value meets a condition, the first information is reported to the network side device.

It should be noted that, for an execution sequence of step 202 and step 301, this embodiment of this application sets no limitation. Specifically, step 301 may be performed before step 202. Alternatively, step 301 may be performed after step 202.

Optionally, in this embodiment of this application, in a first implementation, step 301 is performed after step 202. Specifically, the terminal may determine the quality of the current channel based on the target measurement value, and if the target measurement value is less than or equal to the first threshold, determine that the quality of the current channel is poor, so that the terminal can determine that the receiving manner includes not receiving the control object. Then, the terminal sends the first information to the network side device, so as to indicate that the terminal no longer receives the control object, that is, does not expect the network side device to continue to send the control object. In this case, the network side device may stop sending the control object, thereby reducing network overheads.

In a second implementation, step 301 is performed before step 202. Specifically, the terminal may determine the quality of the current channel based on the target measurement value. If the target measurement value is less than or equal to the first threshold, the terminal determines that the quality of the current channel is poor. Then, the terminal sends the first information to the network side device, and the network side device may send second information to the terminal based on the first information, so as to indicate the terminal to receive the control object or indicate the terminal not to receive the control object. In this way, the terminal determines the receiving manner of the control object based on the second information.

It may be understood that the terminal may directly determine the receiving manner of the control object based on the target measurement value. Alternatively, the terminal may determine the receiving manner of the control object based on the target measurement value and an indication from the network side device.

Optionally, in this embodiment of this application, the first indication information is specifically used to indicate, by using a target channel or a target signal, that the terminal no longer receives the control object.

The target channel is any one of the following: a physical random access channel (physical random access channel, PRACH), a physical uplink shared channel (physical uplink shared channel, PUSCH), and a physical uplink control channel (physical uplink control channel, PUCCH).

Optionally, in this embodiment of this application, the target channel is configured by the network side device or stipulated in the protocol.

Optionally, in this embodiment of this application, "configured by the network side device" may be understood as "preconfigured by the network side device on the terminal" or "currently configured by the network side device for the terminal".

Optionally, in this embodiment of this application, after step 301, the receiving method provided in this embodiment of this application further includes the following step 302 and step 303. In addition, step 202 may be specifically implemented by using the following step 202c.

Step 302: The network side device sends second information to the terminal based on the first information.

The second information is used to indicate the terminal to receive the control object or indicate the terminal not to receive the control object.

Step 303: The terminal receives the second information sent by the network side device.

Step 202c: The terminal determines the receiving manner based on the target measurement value and the second information.

In this embodiment of this application, in a case that the target measurement value meets a condition, the terminal may further determine the receiving manner of the control object according to an indication from the network side device, so as to ensure receiving performance of the control object while reducing power consumption.

Optionally, in this embodiment of this application, the receiving manner includes not receiving the control object. After step 202, the receiving method provided in this embodiment of this application further includes the following step 304.

Step 304: The terminal stops receiving the control object.

In this embodiment of this application, in a case that channel quality is poor, it is insufficient to ensure performance of receiving the control object by a low-power receiver, and the terminal may stop receiving the control object.

It should be noted that, for an execution sequence of step 301 and step 304, this embodiment of this application sets no limitation. Specifically, step 304 may be performed before step 301. Alternatively, step 304 may be performed while step 301 is performed. Alternatively, step 304 may be performed after step 301.

For example, the terminal may first stop receiving the control object, and then send the first information to the network side device. Alternatively, the terminal may stop receiving the control object while sending the first information to the network side device. Alternatively, the terminal may first send the first information to the network side device, and then stop receiving the control object.

Optionally, in this embodiment of this application, before step 202, the receiving method provided in this embodiment of this application further includes the following step 401 and step 402.

Step 401: The terminal sends second indication information to a network side device.

The second indication information is used to indicate that the terminal supports receiving of the control object by using the first receiver or the second receiver.

Step 402: The network side device receives the second indication information sent by the terminal.

In this embodiment of this application, the terminal supports two types of receivers, that is, the first receiver and the second receiver. The terminal may notify the network side device in a capability reporting manner.

In this embodiment of this application, the terminal may determine, based on the quality of the current channel, whether to use the low-power receiver to receive the control object. If the terminal receives the control object by using the low-power receiver, receiving performance is poor and a coverage area is small due to complexity of the receiver. Therefore, in a case that the terminal has a capability with two types of receivers, if it is found that channel quality is poor, the terminal may switch to a routine receiver (also referred to as a primary receiver) to receive the control object. If it is found that channel quality is good, the low-power receiver is still used to receive the control object, which reduces receiving power consumption and ensures receiving performance of the control object.

The receiving method provided in this embodiment of this application may be performed by a receiving apparatus. A receiving apparatus provided in an embodiment of this application is described in an embodiment of this application by using an example in which the receiving apparatus performs the receiving method.

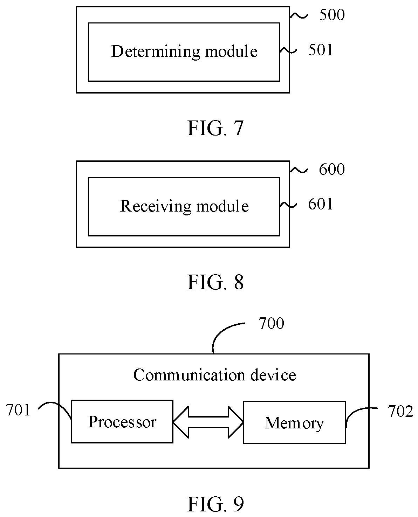

An embodiment of this application provides a receiving apparatus, applied to a terminal. As shown in FIG. 7, the receiving apparatus 500 includes a determining module 501. The determining module 501 is configured to determine a receiving manner of a control object based on a target measurement value;
where the receiving manner includes any one of the following:
receiving the control object by using a first receiver in the terminal;
receiving the control object by using a second receiver in the terminal; and
not receiving the control object;
the control object includes at least one of the following: a control signal and a control channel; and
the target measurement value is used to indicate quality of a current channel.

According to the receiving method provided in this embodiment of this application, the receiving manner of the control signal and/or the control channel may be determined based on the quality of the current channel, that is, a proper receiver is selected based on the quality of the current channel to receive the control signal and/or the control channel, so as to ensure receiving performance of the signal and/or the channel while reducing power consumption.

In a possible implementation, receiving performance of the second receiver is higher than receiving performance of the first receiver.

In a possible implementation, the target measurement value includes at least one of the following: RSRP, RSRQ, an RSSI, an SINR, a CQI, and a hypothetical BLER.

In a possible implementation, the target measurement value is a measurement value obtained by filtering at least one measurement value measured during a first time period.

The first time period is configured by a network side device or stipulated in a protocol.

In a possible implementation, the target measurement value is at least one measurement value continuously measured during a second time period.

The second time period is configured by a network side device or stipulated in a protocol.

In a possible implementation, the determining module 501 is specifically configured to:
in a case that the target measurement value is less than a first threshold, determine that the receiving manner includes receiving the control object by using the second receiver, or not receiving the control object; or
in a case that the target measurement value is greater than the first threshold, determine that the receiving manner includes receiving the control object by using the first receiver.

In a possible implementation, the first threshold is configured by a network side device or stipulated in a protocol.

In a possible implementation, the apparatus 500 further includes a sending module. The sending module is configured to send first information to the network side device based on the target measurement value.

The first information includes at least one of the following:
the target measurement value; and
first indication information, where the first indication information is used to indicate that the terminal no longer receives the control object.

In a possible implementation, the apparatus 500 further includes a receiving module. The receiving module is configured to: after the sending module sends the first information to the network side device based on the target measurement value, receive second information sent by the network side device, where the second information is used to indicate the terminal to receive the control object or indicate the terminal not to receive the control object. The determining module 501 is specifically configured to determine the receiving manner based on the target measurement value and the second information.

In a possible implementation, the first indication information is specifically used to indicate, by using a target channel or a target signal, that the terminal no longer receives the control object.

The target channel is any one of the following: a PRACH, a PUSCH, and a PUCCH.

In a possible implementation, the target channel is configured by the network side device or stipulated in the protocol.

In a possible implementation, the receiving manner includes not receiving the control object. The apparatus 500 further includes a receiving module. The receiving module is configured to: after the determining module 501 determines the receiving manner of the control object based on the target measurement value, stop receiving the control object.

In a possible implementation, the control object is used to indicate at least one of the following:
whether to skip PDCCH monitoring; and
whether to switch a PDCCH search space.

In a possible implementation, the not receiving the control object includes:
not receiving the control object, and performing PDCCH monitoring in all configured PDCCH search spaces.

In a possible implementation, the control object is an object processed in a target processing manner.

The target processing manner includes at least one of the following:
an OOK modulation scheme;
an M-ary amplitude shift keying modulation scheme, where M is a positive integer;
Manchester coding scheme;
a bi-phase space coding scheme;
Miller coding scheme;
a synchronous orthogonal coding scheme; and
a pulse interval encoding scheme.

In a possible implementation, the apparatus 500 further includes a sending module. The sending module is configured to: before the determining module 501 determines the receiving manner of the control object based on the target measurement value, send second indication information to a network side device.

The second indication information is used to indicate that the terminal supports receiving of the control object by using the first receiver or the second receiver.

An embodiment of this application further provides a receiving apparatus, applied to a network side device. As shown in FIG. 8, the receiving apparatus 600 includes a receiving module 601. The receiving module 601 is configured to receive first information sent by a terminal.

The first information includes at least one of the following: a target measurement value and first indication information;
the target measurement value is used to indicate quality of a current channel; and
the first indication information is used to indicate that the terminal no longer receives a control object, and the control object includes at least one of the following: a control signal and a control channel.

According to the receiving method provided in this embodiment of this application, whether to stop sending the control channel or the control signal may be determined according to an indication from the terminal, thereby reducing network overheads.

In a possible implementation, the apparatus 600 further includes a sending module. The sending module is configured to: after the receiving module 601 receives the first information sent by the terminal, send second information to the terminal based on the first information.

The second information is used to indicate the terminal to receive the control object or indicate the terminal not to receive the control object.

In a possible implementation, the target measurement value includes at least one of the following: RSRP, RSRQ, an RSSI, an SINR, a CQI, and a hypothetical BLER.

In a possible implementation, the target measurement value is a measurement value obtained by filtering at least one measurement value measured during a first time period.

The first time period is configured by the network side device or stipulated in a protocol.

In a possible implementation, the target measurement value is at least one measurement value continuously measured during a second time period.

The second time period is configured by the network side device or stipulated in a protocol.

In a possible implementation, the control object is used to indicate at least one of the following:
whether to skip PDCCH monitoring; and
whether to switch a PDCCH search space.

In a possible implementation, the control object is an object processed in a target processing manner.

The target processing manner includes at least one of the following:
an OOK modulation scheme;
an M-ary amplitude shift keying modulation scheme, where M is a positive integer;
Manchester coding scheme;
a bi-phase space coding scheme;
Miller coding scheme;
a synchronous orthogonal coding scheme; and
a pulse interval encoding scheme.

In a possible implementation, the receiving module 601 is further configured to: before receiving the first information sent by the terminal, receive second indication information sent by the terminal.

The second indication information is used to indicate that the terminal supports receiving of the control object by using a first receiver or a second receiver.

The receiving apparatus in this embodiment of this application may be an electronic device, for example, an electronic device with an operating system, or may be a component in the electronic device, for example, an integrated circuit or a chip. The electronic device may be a terminal, or may be another device different from the terminal. For example, the terminal may include but is not limited to the type of the foregoing listed terminal 11. Another device may be a server, a network attached storage (Network Attached Storage, NAS), or the like. This is not specifically limited in this embodiment of this application.

The receiving apparatus provided in this embodiment of this application can implement various processes realized in the method embodiments of FIG. 2 to FIG. 5, and achieve a same technical effect. To avoid repetition, details are not described herein.

Optionally, as shown in FIG. 9, an embodiment of this application further provides a communication device 700, including a processor 701 and a memory 702, and a program or instructions capable of running on the processor 701 are stored in the memory 702. For example, when the communication device 700 is a terminal, each step of the receiving method embodiment is implemented when the program or the instructions are executed by the processor 701, and a same technical effect can be achieved. When the communication device 700 is a network side device, each step of the receiving method embodiment is implemented when the program or the instructions are executed by the processor 701, and a same technical effect can be achieved. To avoid repetition, details are not described herein again.

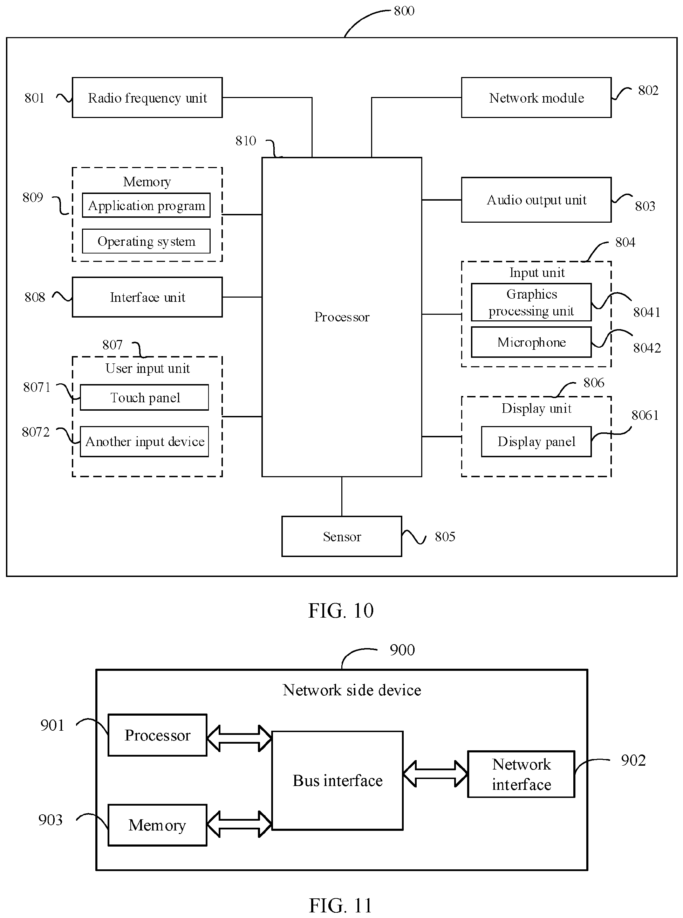

An embodiment of this application further provides a terminal, including a processor and a communication interface, where the processor is configured to determine a receiving manner of a control object based on a target measurement value. The receiving manner includes any one of the following: receiving the control object by using a first receiver in the terminal, receiving the control object by using a second receiver in the terminal, and not receiving the control object; the control object includes at least one of the following: a control signal and a control channel; and the target measurement value is used to indicate quality of a current channel. This terminal embodiment is corresponding to the foregoing terminal-side method embodiment. Each implementation process and implementation of the foregoing method embodiment may be applied to this terminal embodiment, and a same technical effect can be achieved. Specifically, FIG. 10 is a schematic diagram of a hardware structure of a terminal according to an embodiment of this application.

The terminal 800 includes but is not limited to at least a part of components such as a radio frequency unit 801, a network module 802, an audio output unit 803, an input unit 804, a sensor 805, a display unit 806, a user input unit 807, an interface unit 808, a memory 809, and a processor 810.

A person skilled in the art may understand that the terminal 800 may further include a power supply (for example, a battery) that supplies power to each component. The power supply may be logically connected to the processor 810 by using a power management system, so as to manage functions such as charging, discharging, and power consumption by using the power management system. The terminal structure shown in FIG. 10 constitutes no limitation on the terminal, and the terminal may include more or fewer components than those shown in the figure, or combine some components, or have different component arrangements.

It should be understood that, in this embodiment of this application, the input unit 804 may include a graphics processing unit (Graphics Processing Unit, GPU) 8041 and a microphone 8042. The graphics processing unit 8041 processes image data of a still picture or a video obtained by an image capture apparatus (such as a camera) in a video capture mode or an image capture mode. The display unit 806 may include a display panel 8061. The display panel 8061 may be configured in a form such as a liquid crystal display or an organic light-emitting diode. The user input unit 807 may include at least one of a touch panel 8071 and another input device 8072. The touch panel 8071 is also referred to as a touchscreen. The touch panel 8071 may include two parts: a touch detection apparatus and a touch controller. The another input device 8072 may include but is not limited to a physical keyboard, a function key (such as a volume control key or an on/off key), a trackball, a mouse, and a joystick. Details are not described herein.

In this embodiment of this application, after receiving downlink data from a network side device, the radio frequency unit 801 may transmit the downlink data to the processor 810 for processing. In addition, the radio frequency unit 801 may send uplink data to the network side device. Generally, the radio frequency unit 801 includes but is not limited to: an antenna, an amplifier, a transceiver, a coupler, a low noise amplifier, a duplexer, and the like.

The memory 809 may be configured to store a software program, instructions, and various data. The memory 809 may mainly include a first storage area for storing a program or instructions and a second storage area for storing data, where the first storage area may store an operating system, an application program or instructions (such as a sound playback function or an image playback function) required by at least one function, and the like. In addition, the memory 809 may include a volatile memory or a non-volatile memory, or the memory 809 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 809 in this embodiment of this application includes but is not limited to these and any other suitable type of memory.

The processor 810 may include one or more processing units. Optionally, the processor 810 integrates an application processor and a modem processor, where the application processor mainly processes operations related to an operating system, a user interface, an application program, and the like, and the modem processor mainly processes a wireless communication signal, such as a baseband processor. It may be understood that the modem processor may not be integrated into the processor 810.

The processor 810 is configured to determine a receiving manner of a control object based on a target measurement value.

The receiving manner includes any one of the following:
receiving the control object by using a first receiver in the terminal;
receiving the control object by using a second receiver in the terminal; and
not receiving the control object;
the control object includes at least one of the following: a control signal and a control channel; and
the target measurement value is used to indicate quality of a current channel.

The terminal provided in this embodiment of this application may determine the receiving manner of the control signal and/or the control channel based on the quality of the current channel, that is, select a proper receiver based on the quality of the current channel to receive the control signal and/or the control channel, so as to ensure receiving performance of the signal and/or the channel while reducing power consumption.

Optionally, in this embodiment of this application, the processor 810 is specifically configured to:
in a case that the target measurement value is less than a first threshold, determine that the receiving manner includes receiving the control object by using the second receiver, or not receiving the control object; or
in a case that the target measurement value is greater than the first threshold, determine that the receiving manner includes receiving the control object by using the first receiver.

Optionally, in this embodiment of this application, the radio frequency unit 801 is configured to send first information to a network side device based on the target measurement value.

The first information includes at least one of the following:
the target measurement value; and
first indication information, where the first indication information is used to indicate that the terminal no longer receives the control object.

Optionally, in this embodiment of this application, the radio frequency unit 801 is further configured to: after sending the first information to the network side device based on the target measurement value, receive second information sent by the network side device, where the second information is used to indicate the terminal to receive the control object or indicate the terminal not to receive the control object. The processor 810 is specifically configured to determine the receiving manner based on the target measurement value and the second information.

Optionally, in this embodiment of this application, the receiving manner includes not receiving the control object. The radio frequency unit 801 is configured to: after the receiving manner of the control object is determined based on the target measurement value, stop receiving the control object.

Optionally, in this embodiment of this application, the radio frequency unit 801 is configured to: before the receiving manner of the control object is determined based on the target measurement value, send second indication information to the network side device.

The second indication information is used to indicate that the terminal supports receiving of the control object by using the first receiver or the second receiver.

An embodiment of this application further provides a network side device, including a processor and a communication interface, where the communication interface is configured to receive first information sent by a terminal, where the first information includes at least one of the following: a target measurement value and first indication information; the target measurement value is used to indicate quality of a current channel; and the first indication information is used to indicate that the terminal no longer receives a control object, and the control object includes at least one of the following: a control signal and a control channel. The network side device embodiment is corresponding to the foregoing network side device method embodiment. Each implementation process and implementation of the foregoing method embodiment may be applicable to the network side device embodiment, and a same technical effect can be achieved.

Specifically, an embodiment of this application further provides a network side device. As shown in FIG. 11, the network side device 900 includes a processor 901, a network interface 902, and a memory 903. The network interface 902 is, for example, a common public radio interface (common public radio interface, CPRI).

Specifically, the network side device 900 in this embodiment of the present invention further includes instructions or a program stored in the memory 903 and capable of running on the processor 901. The processor 901 invokes the instructions or the program in the memory 903 to perform the method performed by the modules shown in FIG. 8, and a same technical effect can be achieved. To avoid repetition, details are not described herein again.

An embodiment of this application further provides a readable storage medium. The readable storage medium stores a program or instructions. When the program or the instructions are executed by a processor, various processes in the foregoing receiving method embodiments are implemented, and a same technical effect can be achieved. To avoid repetition, details are not described herein again.

The processor is the processor in the terminal in the foregoing embodiment. The readable storage medium includes a computer-readable storage medium such as a computer read-only memory ROM, a random access memory RAM, a magnetic disk, or an optical disc.

An embodiment of this application further provides a chip. The chip includes a processor and a communication interface. The communication interface is coupled to the processor. The processor is configured to run a program or instructions to implement various processes in the foregoing receiving method embodiments, and a same technical effect can be achieved. To avoid repetition, details are not described herein again.

It should be understood that the chip mentioned in this embodiment of this application may also be referred to as a system-level chip, a system chip, a chip system, or a system on chip.

An embodiment of this application further provides a computer program/program product. The computer program/program product is stored in a storage medium, and the computer program/program product is executed by at least one processor to implement various processes in the foregoing receiving method embodiments, and a same technical effect can be achieved. To avoid repetition, details are not described herein again.

An embodiment of this application further provides a communication system, including a terminal and a network side device, where the terminal may be configured to perform the steps of the foregoing receiving method, and the network side device may be configured to perform the steps of the foregoing receiving method.

It should be noted that, the terms "include", "comprise", or any other variation thereof in this specification are intended to cover a non-exclusive inclusion, so that a process, method, article, or apparatus that includes a list of elements includes the elements, and also includes other elements that are not expressly listed, or further includes elements inherent to such a process, method, article, or apparatus. Without more limitations, elements defined by the sentence "including one" does not exclude that there are still other same elements in the processes, methods, objects, or apparatuses that include the elements. In addition, it should be noted that the scope of the method and apparatus in the embodiments of this application is not limited to performing a function in a sequence shown or discussed, and may further include performing a function in a basically simultaneous manner or in a reverse sequence based on a related function. For example, the described method may be performed in an order different from the described order, and various steps may be added, omitted, or combined. In addition, features described with reference to some examples may be combined in other examples.

Based on the descriptions in the foregoing implementations, a person skilled in the art may clearly learn that the method in the foregoing embodiment may be implemented by software in addition to a necessary universal hardware platform or by hardware. In most circumstances, the former is a better implementation. Based on such an understanding, the technical solutions of this application essentially, or the part contributing to the prior art, may be presented in the form of a computer software product. The computer software product is stored in a storage medium (for example, a ROM/RAM, a magnetic disk, or an optical disc) including several instructions to enable a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific implementations. The foregoing specific implementations are merely examples, and are not restrictive. Under the enlightenment of this application, many forms may be further made by a person of ordinary skill in the art without departing from the objective of this application and the protection scope of the claims and shall fall within the protection scope of this application.

## Claims

1. A receiving method, comprising:
determining, by a terminal, a receiving manner of a control object based on a target measurement value;
wherein the receiving manner comprises any one of the following:
receiving the control object by using a first receiver in the terminal;
receiving the control object by using a second receiver in the terminal; and
not receiving the control object;
the control object comprises at least one of the following: a control signal and a control channel; and
the target measurement value is used to indicate quality of a current channel.

2. The method according to claim 1, wherein receiving performance of the second receiver is higher than receiving performance of the first receiver.

3. The method according to claim 1, wherein the target measurement value comprises at least one of the following:
reference signal received power RSRP;
reference signal received quality RSRQ;
a received signal strength indicator RSSI;
a signal to interference plus noise ratio SINR;
a channel quality indicator CQI; and
a hypothetical block error rate BLER.

4. The method according to claim 1, wherein the target measurement value is a measurement value obtained by filtering at least one measurement value measured during a first time period;
wherein the first time period is configured by a network side device or stipulated in a protocol.

5. The method according to claim 1, wherein the target measurement value is at least one measurement value continuously measured during a second time period;
wherein the second time period is configured by a network side device or stipulated in a protocol.

6. The method according to any one of claims 1 to 5, wherein the determining, by a terminal, a receiving manner of a control object based on a target measurement value comprises any one of the following:
in a case that the target measurement value is less than a first threshold, determining, by the terminal, that the receiving manner comprises receiving the control object by using the second receiver, or not receiving the control object; or
in a case that the target measurement value is greater than the first threshold, determining, by the terminal, that the receiving manner comprises receiving the control object by using the first receiver.

7. The method according to claim 6, wherein the first threshold is configured by a network side device or stipulated in a protocol.

8. The method according to any one of claims 1 to 5, wherein the method further comprises:
sending, by the terminal, first information to a network side device based on the target measurement value;
wherein the first information comprises at least one of the following:
the target measurement value; and
first indication information, wherein the first indication information is used to indicate that the terminal no longer receives the control object.

9. The method according to claim 8, wherein after the sending, by the terminal, first information to the network side device based on the target measurement value, the method further comprises:
receiving, by the terminal, second information sent by the network side device, wherein the second information is used to indicate the terminal to receive the control object or indicate the terminal not to receive the control object; and
the determining, by a terminal, a receiving manner of a control object based on a target measurement value comprises:
determining, by the terminal, the receiving manner based on the target measurement value and the second information.

10. The method according to claim 8, wherein the first indication information is specifically used to indicate, by using a target channel or a target signal, that the terminal no longer receives the control object;
wherein the target channel is any one of the following: a physical random access channel PRACH, a physical uplink shared channel PUSCH, and a physical uplink control channel PUCCH.

11. The method according to claim 9, wherein the target channel is configured by the network side device or stipulated in a protocol.

12. The method according to claim 1, wherein the receiving manner comprises not receiving the control object; and after the determining, by a terminal, a receiving manner of a control object based on a target measurement value, the method further comprises:
stopping, by the terminal, receiving the control object.

13. The method according to claim 1, wherein the control object is used to indicate at least one of the following:
whether to skip physical downlink control channel PDCCH monitoring; and
whether to switch a PDCCH search space.

14. The method according to claim 1 or 13, wherein the not receiving the control object comprises:
not receiving the control object, and performing PDCCH monitoring in all configured PDCCH search spaces.

15. The method according to claim 1, wherein the control object is an object processed in a target processing manner;
wherein the target processing manner comprises at least one of the following:
an on-off keying OOK modulation scheme;
an M-ary amplitude shift keying modulation scheme, wherein M is a positive integer;
Manchester coding scheme;
a bi-phase space coding scheme;
Miller coding scheme;
a synchronous orthogonal coding scheme; and
a pulse interval encoding scheme.

16. The method according to claim 1, wherein before the determining, by a terminal, a receiving manner of a control object based on a target measurement value, the method further comprises:
sending, by the terminal, second indication information to a network side device;
wherein the second indication information is used to indicate that the terminal supports receiving of the control object by using the first receiver or the second receiver.

17. A receiving method, comprising:
receiving, by a network side device, first information sent by a terminal;
wherein the first information comprises at least one of the following: a target measurement value and first indication information;
the target measurement value is used to indicate quality of a current channel; and
the first indication information is used to indicate that the terminal no longer receives a control object, and the control object comprises at least one of the following: a control signal and a control channel.

18. The method according to claim 17, wherein after the receiving, by a network side device, first information sent by a terminal, the method further comprises:
sending, by the network side device, second information to the terminal based on the first information;
wherein the second information is used to indicate the terminal to receive the control object or indicate the terminal not to receive the control object.

19. The method according to claim 17 or 18, wherein the target measurement value comprises at least one of the following: RSRP, RSRQ, an RSSI, an SINR, a CQI, and a hypothetical BLER.

20. The method according to claim 17 or 18, wherein the target measurement value is a measurement value obtained by filtering at least one measurement value measured during a first time period;
wherein the first time period is configured by the network side device or stipulated in a protocol.

21. The method according to claim 17 or 18, wherein the target measurement value is at least one measurement value continuously measured during a second time period;
wherein the second time period is configured by the network side device or stipulated in a protocol.

22. The method according to claim 17, wherein the control object is used to indicate at least one of the following:
whether to skip PDCCH monitoring; and
whether to switch a PDCCH search space.

23. The method according to claim 17, wherein the control object is an object processed in a target processing manner;
wherein the target processing manner comprises at least one of the following:
an OOK modulation scheme;
an M-ary amplitude shift keying modulation scheme, wherein M is a positive integer;
Manchester coding scheme;
a bi-phase space coding scheme;
Miller coding scheme;
a synchronous orthogonal coding scheme; and
a pulse interval encoding scheme.

24. The method according to claim 17, wherein before the receiving, by a network side device, first information sent by a terminal, the method further comprises:
receiving, by the network side device, second indication information sent by the terminal;
wherein the second indication information is used to indicate that the terminal supports receiving of the control object by using a first receiver or a second receiver.

25. A receiving apparatus, comprising a determining module, wherein
the determining module is configured to determine a receiving manner of a control object based on a target measurement value;
wherein the receiving manner comprises any one of the following:
receiving the control object by using a first receiver in a terminal;
receiving the control object by using a second receiver in the terminal; and
not receiving the control object;
the control object comprises at least one of the following: a control signal and a control channel; and
the target measurement value is used to indicate quality of a current channel.

26. The apparatus according to claim 25, wherein receiving performance of the second receiver is higher than receiving performance of the first receiver.

27. The apparatus according to claim 25, wherein the target measurement value comprises at least one of the following: RSRP, RSRQ, an RSSI, an SINR, a CQI, and a hypothetical BLER.

28. The apparatus according to claim 25, wherein the target measurement value is a measurement value obtained by filtering at least one measurement value measured during a first time period;
wherein the first time period is configured by a network side device or stipulated in a protocol.

29. The apparatus according to claim 25, wherein the target measurement value is at least one measurement value continuously measured during a second time period;
wherein the second time period is configured by a network side device or stipulated in a protocol.

30. The apparatus according to any one of claims 25 to 29, wherein the determining module is specifically configured to:
in a case that the target measurement value is less than a first threshold, determine that the receiving manner comprises receiving the control object by using the second receiver, or not receiving the control object; or
in a case that the target measurement value is greater than the first threshold, determine that the receiving manner comprises receiving the control object by using the first receiver.

31. The apparatus according to any one of claims 25 to 29, wherein the apparatus further comprises a sending module; and
the sending module is configured to send first information to the network side device based on the target measurement value;
wherein the first information comprises at least one of the following:
the target measurement value; and
first indication information, wherein the first indication information is used to indicate that the terminal no longer receives the control object.

32. The apparatus according to claim 31, wherein the apparatus further comprises a receiving module;
the receiving module is configured to: after the sending module sends the first information to the network side device based on the target measurement value, receive second information sent by the network side device, wherein the second information is used to indicate the terminal to receive the control object or indicate the terminal not to receive the control object; and
the determining module is specifically configured to determine the receiving manner based on the target measurement value and the second information.

33. The apparatus according to claim 25, wherein the receiving manner comprises not receiving the control object; and the apparatus further comprises a receiving module; and
the receiving module is configured to: after the determining module determines the receiving manner of the control object based on the target measurement value, stop receiving the control object.

34. The apparatus according to claim 25, wherein the control object is used to indicate at least one of the following:
whether to skip PDCCH monitoring; and
whether to switch a PDCCH search space.

35. The apparatus according to claim 25 or 13, wherein the not receiving the control object comprises:
not receiving the control object, and performing PDCCH monitoring in all configured PDCCH search spaces.

36. The apparatus according to claim 25, wherein the apparatus further comprises a sending module; and
the sending module is configured to: before the determining module determines the receiving manner of the control object based on the target measurement value, send second indication information to a network side device;
wherein the second indication information is used to indicate that the terminal supports receiving of the control object by using the first receiver or the second receiver.

37. A receiving apparatus, comprising a receiving module, wherein
the receiving module is configured to receive first information sent by a terminal;
wherein the first information comprises at least one of the following: a target measurement value and first indication information;
the target measurement value is used to indicate quality of a current channel; and
the first indication information is used to indicate that the terminal no longer receives a control object, and the control object comprises at least one of the following: a control signal and a control channel.

38. The apparatus according to claim 37, wherein the apparatus further comprises a sending module; and
the sending module is configured to: after the receiving module receives the first information sent by the terminal, send second information to the terminal based on the first information;
wherein the second information is used to indicate the terminal to receive the control object or indicate the terminal not to receive the control object.

39. The apparatus according to claim 37, wherein the receiving module is further configured to: before receiving the first information sent by the terminal, receive second indication information sent by the terminal;
wherein the second indication information is used to indicate that the terminal supports receiving of the control object by using a first receiver or a second receiver.

40. A terminal, comprising a processor and a memory, wherein the memory stores a program or instructions capable of running on the processor, and the program or the instructions are executed by the processor to implement the steps of the receiving method according to any one of claims 1 to 16.

41. A network side device, comprising a processor and a memory, wherein the memory stores a program or instructions capable of running on the processor, and the program or the instructions are executed by the processor to implement the steps of the receiving method according to any one of claims 17 to 24.

42. A readable storage medium, wherein a program or instructions are stored on the readable storage medium, and the program or instructions are executed by a processor to implement the receiving method according to any one of claims 1 to 16, or to implement the steps of the receiving method according to any one of claims 17 to 24.
